# EUROPEAN PATENT APPLICATION

(11) **EP 3 660 671 A1**
(43) Date of publication of application: **03.06.2020**
(21) Application number: 17918934.5
(22) Date of filing: 29.09.2017
(51) Int. Cl.: G06F 9/445

(54) **NDIS DEVICE CONFIGURATION METHOD AND APPARATUS, AND COMPUTER STORAGE MEDIUM**

(30) Priority: 25.07.2017 CN 201710612223
(71) Applicant: ZTE Corporation, Shenzhen, Guangdong 518057 (CN)
(72) Inventor: BAI, Jie, Shenzhen Guangdong 518057 (CN)
(74) Representative: Petraz, Gilberto Luigi
(86) International application number: PCT/CN2017/104478
(87) International publication number: WO 2019/019367

(57) **Abstract**

An NDIS device configuration method includes: during installation of an application on an NDIS device, testing a computer environment and recording computer environment information; during installation of a driver on the NDIS device, selecting, according to the computer environment information, a corresponding NDIS driver version for pre-installation; and when the application of the NDIS device is running, initializing, according to the computer environment information, a corresponding application software development kit. An NDIS device configuration apparatus and a computer storage medium are provided. The provided technical solution configures an NDIS device according to an environment.

## Description

### Field of the Invention

Embodiments of the present disclosure relate to, but not limited to, the field of communication technology, and in particular, to an NDIS device configuration method and apparatus, and a computer storage medium.

### Background of the Invention

NDIS (Network Driver Interface Specification) creates a complete development environment for network drivers. Only an NDIS function needs to be called, regardless of a kernel of an operating system and the interface with other drivers, so that network drivers can be separated from the complex communication with the operating system, greatly facilitating network driver programming. Due to the packaging characteristics of NDIS, developers can focus more on the design of network drivers. Moreover, NDIS spans a transport layer, a network layer, and a data link layer. The defined communication interface specification shields the difference between underlying physical hardware and enables an overlying protocol driver to communicate with any underlying network card. Therefore, most USB network devices of Windows operating systems adopt NDIS devices.

Based on different versions of NDIS library provided by the Windows operating systems, four types of NDIS devices can be developed: NDIS5.1, NDIS6.0, NDIS6.2, and NDIS6.3. The features of these devices are as follows.

NDIS5.1: is applied to all Windows operating systems, uses a host driver provided by a manufacturer or a customer, cooperates with applications provided by a manufacturer to realize a function of internet surfing, and is not a mobile broadband network device.

NDIS 6.0: is applied to VISTA and later versions, uses a host driver provided by a manufacturer, cooperates with applications provided by a manufacturer or a customer to realize a function of internet surfing, and is not a mobile broadband network device.

NDIS6.2: is applied to Windows 7 and later versions, uses a host driver provided by a manufacturer, cooperates with system-provided applications to realize a function of internet surfing or cooperates with applications developed by an MBN (modem software configuration) API (application programming interface) provided by a customer to realize functions such as internet surfing and short messages, and is a mobile broadband network device.

NDIS6.3: is applied to Windows 8 and later versions, uses a host driver provided by a manufacturer, cooperates with system-provided applications to realize a function of internet surfing or cooperates with applications developed by an MBN API provided by a customer to realize functions such as internet surfing, short messages and telephone books, and is a mobile broadband network device.

After introduction of NDIS 6.2 on Windows 7, Microsoft continuously promoted NDIS 6.2 devices to major operators. In addition to the function of internet surfing, NDIS 6.2 devices have realized many functions because NDIS 6.2 devices are mobile broadband network devices. Instead, there is less publicity for NDIS6.0 and NDIS6.3. Moreover, after introduction of NDIS6.3, Microsoft soon introduced MBIM (mobile broadband interface model) devices on Windows 8 and provided its own drivers. Therefore, the requirements of major operator customers for NDIS devices are as follows: NDIS devices for XP and VISTA require NDIS 5.1, and NDIS devices for Windows 7 and later versions require NDIS6.2.

With the extensive use of tablet computers, problems with NDIS devices have occurred on tablet computers. When the NDIS devices are used on a tablet computer that supports a power-saving Sleep function, a sleep button in the computer's start menu will disappear, which means that the computer will lose the power-saving Sleep function. The operating systems installed on this type of computer are Windows 8 and later versions. The Sleep function here is actually Connected Standby (Windows 8/Windows 8.1) or Modern Standby (Windows 10). The operating system will determine whether the computer supports the power-saving Sleep function according to a BIOS (basic input output system) of the computer and according to whether a network device of the computer supports Connected Standby and Modern Standby. When the operating system determines that an NDIS6.2 device is a mobile broadband network device that does not support Connected Standby and Modern Standby, it is confirmed that the computer does not support the power-saving Sleep function, and the sleep button in the computer's start menu will automatically disappear. When it is further confirmed that a non-mobile broadband network device of this type of computer supports Connected Standby or the Sleep function, if the device is an NDIS mobile broadband network device, it must be an NDIS6.3 device. Therefore, NDIS5.1 devices and NDIS6. 3 devices have no effect on the power-saving Sleep function of this type of computer. Thus, it is problematic to specify an NDIS device type according to an operating system.

### Summary of the Invention

One problem to be solved by embodiments of the present disclosure is to provide an NDIS device configuration method and apparatus to adaptively configure an NDIS device according to an environment.

An NDIS device configuration method, including:
during installation of an application on an NDIS device, testing a computer environment and recording computer environment information;
during installation of a driver on the NDIS device, selecting, according to the computer environment information, a corresponding NDIS driver version for pre-installation; and
when the application of the NDIS device is running, initializing, according to the computer environment information, a corresponding application software development kit.

According to one exemplary embodiment, testing a computer environment and recording computer environment information includes:
if it is tested that an operating system version of a computer is a first operating system version, recording first computer environment information;
if it is tested that the operating system version of the computer is neither the first operating system version nor a second operating system version, recording second computer environment information;
if it is tested that the operating system version of the computer is the second operating system version and the computer does not support a specified sleep mode, recording third computer environment information; and
if it is tested that the operating system version of the computer is the second operating system version and the computer supports the specified sleep mode, reading a configuration file, and recording corresponding fourth computer environment information according to a customer demand.

According to one exemplary embodiment, testing the operating system version of the computer is performed by calling a system application programming interface.

According to one exemplary embodiment, the specified sleep mode includes a connected standby mode or a new standby mode.

According to one exemplary embodiment, selecting, according to the computer environment information, a corresponding NDIS driver version for pre-installation includes:
according to the computer environment information, selecting, from a correlation between computer environment information and NDIS device driver versions preset in a configuration file, a corresponding NDIS device driver version for pre-installation.

According to one exemplary embodiment, after running of the application of the NDIS device, the method further includes:
when the application of the NDIS device is uninstalled, deleting registry information related to the computer environment.

An NDIS device configuration apparatus, including:
a test module, which is configured to test a computer environment and record computer environment information during installation of an application on an NDIS device;
a driver installation module, which is configured to select, according to the computer environment information, a corresponding NDIS driver version for pre-installation during installation of a driver on the NDIS device; and
a configuration module, which is configured to initialize, according to the computer environment information, a corresponding application software development kit when the application of the NDIS device is running.

According to one exemplary embodiment, testing a computer environment and recording computer environment information by the test module includes: if it is tested that an operating system version of a computer is a first operating system version, recording first computer environment information; if it is tested that the operating system version of the computer is neither the first operating system version nor a second operating system version, recording second computer environment information; if it is tested that the operating system version of the computer is the second operating system version and the computer does not support a specified sleep mode, recording third computer environment information; and if it is tested that the operating system version of the computer is the second operating system version and the computer supports the specified sleep mode, reading a configuration file, and recording corresponding fourth computer environment information according to a customer demand.

According to one exemplary embodiment, testing, by the test module, the operating system version of the computer is performed by calling a system application programming interface.

According to one exemplary embodiment, according to the computer environment information, selecting, by the driver installation module, a corresponding NDIS device driver version for pre-installation includes: according to the computer environment information, selecting, from a correlation between computer environment information and NDIS device driver versions preset in a configuration file, a corresponding NDIS device driver version for pre-installation.

According to one exemplary embodiment, the apparatus further includes:
an uninstallation module, which is configured to delete registry information related to the computer environment when the application of the NDIS device is uninstalled.

An NDIS device configuration apparatus, including: a memory, a processor, and a computer program stored on the memory and executable on the processor, wherein when executing the program, the processor implements the following steps:
during installation of an application on an NDIS device, testing a computer environment and recording computer environment information;
during installation of a driver on the NDIS device, selecting, according to the computer environment information, a corresponding NDIS driver version for pre-installation; and
when the application of the NDIS device is running, initializing, according to the computer environment information, a corresponding application software development kit.

An embodiment of the present disclosure further provides an NDIS device configuration apparatus, including: a memory, a processor, and a computer program stored on the memory and executable on the processor, wherein when executing the program, the processor implements the NDIS device configuration method.

An embodiment of the present disclosure further provides a computer storage medium storing thereon one or more programs executable by a computer, when executed by the computer, the one or more programs causing the computer to implement the NDIS device configuration method.

In conclusion, according to the embodiments of the present disclosure, an NDIS device configuration method and apparatus are provided to adaptively configure an NDIS device according to an environment.

### Brief Description of the Drawings

Fig. 1 is a flowchart of an NDIS device configuration method according to Embodiment one of the present disclosure.
Fig. 2 is a schematic diagram of an NDIS device configuration apparatus according to Embodiment two of the present disclosure.
Fig. 3 is a block diagram of a system structure for implementing an NDIS device configuration method according to Embodiment three of the present disclosure.
Fig. 4 is a flowchart of an NDIS device configuration method according to Embodiment three of the present disclosure.
Fig. 5 is a flowchart of computer environment test in Embodiment three of the present disclosure.

### Detailed Description of the Embodiments

In order to make the objective, technical solution, and advantages of the present disclosure clearer, embodiments of the present disclosure will be described in detail below with reference to the accompanying drawings. It should be noted that, in the case of no conflict, the embodiments in the present application and the features in the embodiments can be combined in any way.

### Embodiment one

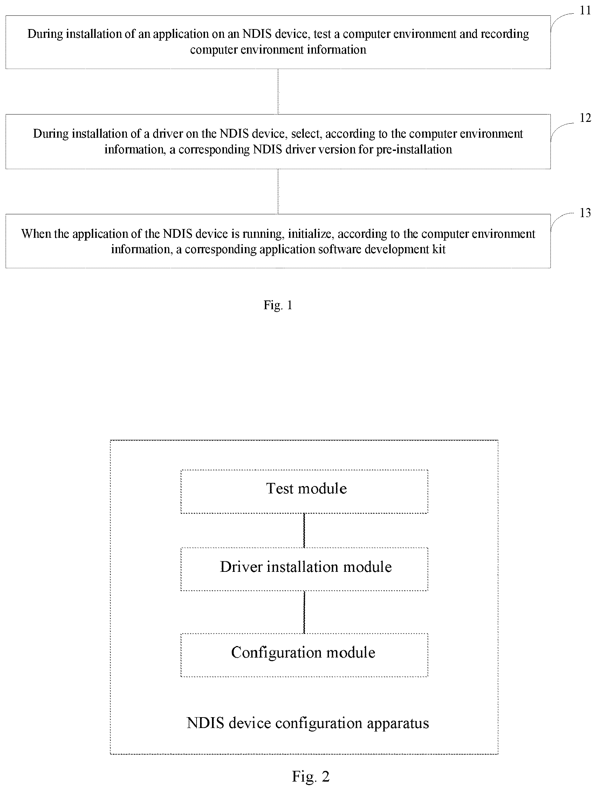

Fig. 1 is a flowchart of an NDIS device configuration method according to the present embodiment. As shown in Fig. 1, the method of the present embodiment includes steps 11-13.

At step 11, during installation of an application on an NDIS device, a computer environment is tested and computer environment information is recorded;
At step 12, during installation of a driver on the NDIS device, a corresponding NDIS driver version for pre-installation is selected according to the computer environment information.

At step 13, when the application of the NDIS device is running, a corresponding application software development kit is initialized according to the computer environment information.

The method according to the embodiment of the present disclosure can test a computer environment in which an NDIS device will work, and adaptively configure and install different NDIS device drivers and NDIS device applications according to different computer environments so as to solve the problem of loss of a power-saving sleep function of tablet computers, realizing customer demands on NDIS devices and improving user experience of products.

In an embodiment, testing a computer environment and recording computer environment information includes:
if it is tested that an operating system version of a computer is a first operating system version, recording first computer environment information;
if it is tested that the operating system version of the computer is neither the first operating system version nor a second operating system version, recording second computer environment information;
if it is tested that the operating system version of the computer is the second operating system version and the computer does not support a specified sleep mode, recording third computer environment information; and
if it is tested that the operating system version of the computer is the second operating system version and the computer supports the specified sleep mode, reading a configuration file, and recording corresponding fourth computer environment information according to a customer demand.

The specified sleep mode can be a connected standby mode or a modern standby mode.

The problem of loss of a power-saving sleep function may occur when an NDIS6.2 device is used for a tablet computer that supports connected standby (Windows 8/Windows 8.1) or modern standby (Windows 10). With the increase of customer groups who find this problem, an NDIS demand in such an environment cannot be NDIS6.2, but NDIS5.1 or NDIS6.3 depending on customers.

The method provided in the present embodiment is mainly to add some functional methods to an existing application module and driver module. Function modules for environment testing, environment recording, adaptively configuring an initial application SDK (software development kit) and deleting environment records need to be added to an application. Environment reading needs to be added to a driver to adaptively configurate and install function modules of different NDIS device drivers according to different environments.

### Embodiment two

Accordingly, an embodiment of the present disclosure provides an NDIS device configuration apparatus. As shown in Fig. 2, the apparatus of the present embodiment includes a test module, a driver installation module, and a configuration module.

The test module is configured to test a computer environment and record computer environment information during installation of an application on an NDIS device.

The driver installation module is configured to select, according to the computer environment information, a corresponding NDIS driver version for pre-installation during installation of a driver on the NDIS device.

The configuration module is configured to initialize, according to the computer environment information, a corresponding application software development kit when the application of the NDIS device is running.

In an embodiment, testing a computer environment and recording computer environment information by the test module includes: if it is tested that an operating system version of a computer is a first operating system version, recording first computer environment information; if it is tested that the operating system version of the computer is neither the first operating system version nor a second operating system version, recording second computer environment information; if it is tested that the operating system version of the computer is the second operating system version and the computer does not support a specified sleep mode, recording third computer environment information; and if it is tested that the operating system version of the computer is the second operating system version and the computer supports the specified sleep mode, reading a configuration file, and recording corresponding fourth computer environment information according to a customer demand.

In an embodiment, testing, by the test module, the operating system version of the computer is performed by calling a system application programming interface.

In an embodiment, according to the computer environment information, selecting, by the driver installation module, a corresponding NDIS device driver version for pre-installation includes: according to the computer environment information, selecting, from a correlation between computer environment information and NDIS device driver versions preset in a configuration file, a corresponding NDIS device driver version for pre-installation.

In an embodiment, the apparatus further includes an uninstallation module.

The uninstallation module is configured to delete registry information related to the computer environment when the application of the NDIS device is uninstalled.

### Embodiment three

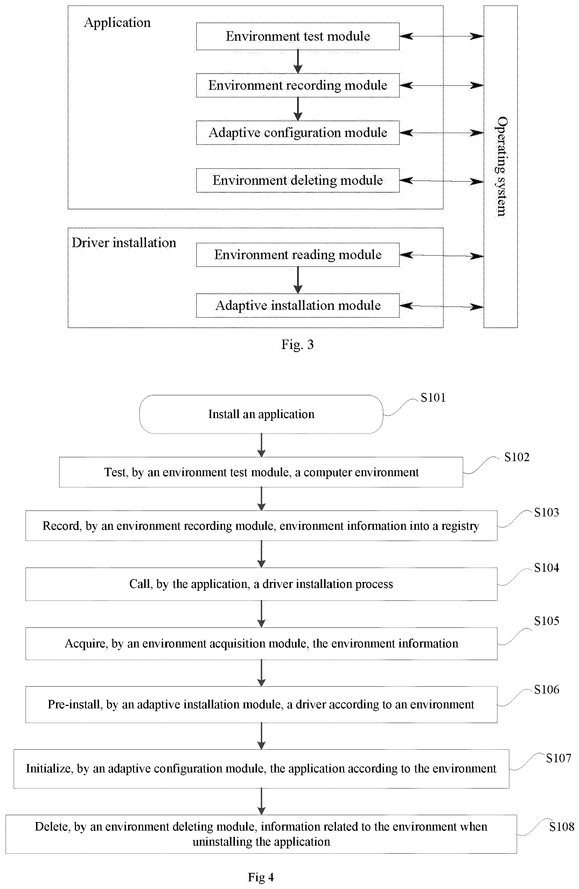

Fig. 3 is a block diagram of a system structure for implementing an NDIS device configuration method according to an embodiment of the present disclosure. As shown in Fig. 3 :
an environment test module is configured to test an environment in which an NDIS device will work;
an environmental recording module is configured to record environment information in a place in which an environment reading module can read the environment information;
an adaptive configuration module is configured to initialize, according to different environments, an application SDK used by an NDIS device;
an environment deleting module is configured to delete recorded environment information when an application is uninstalled;
an environment reading module is configured to read environment information from a place in which the environmental information is recorded; and
an adaptive installation module is configured to pre-install different NDIS device drivers according to different environments.

Fig. 4 is a flowchart of an NDIS device configuration method according to the present embodiment. As shown in Fig. 4, the method includes the following steps.

At step S101, an application is installed.

The application is installed automatically or a user performs installation of the application manually.

At step S102, an environment test module in the application tests a computer environment.

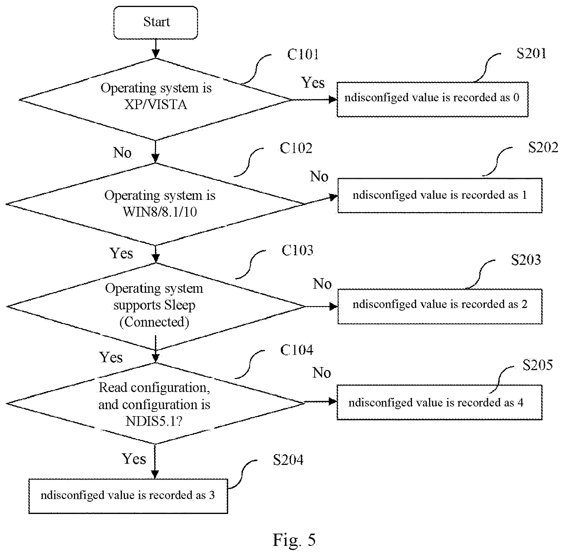

A process of computer environment test shown in Fig. 5 includes the following steps.

At determination C101, it is tested whether a computer system is an XP or VISTA system. If so, a step S201 is performed; otherwise, a determination C102 is performed.

At determination C102, it is determined whether the computer system is a Windows 8, Windows 8.1 or Windows 10 system. If so, a determination C103 is performed; otherwise, a step S202 is performed.

At determination C103, it is determined whether the computer supports a sleep (connected) function. If so, a determination C104 is performed; otherwise, a step S203 is performed.

At determination C104, a configuration file is read, and it is confirmed whether a customer demand configuration is NDIS5.1. If the customer demand configuration is NDIS5.1, a step S204 is performed; if the customer demand configuration is NDS6.3, a step S205 is performed.

At step S201, an ndisconfiged value is recorded as 0.

At step S202, a value of ndisconfiged is recorded as 1.

At step S203, a value of ndisconfiged is recorded as 2.

At step S204, a value of ndisconfiged is recorded as 3.

At step S205: a value of ndisconfiged is recorded as 4.

The environment test module performs test of an operating system version by calling a system API (application programming interface), checks, through powercfg /a, which sleep modes the system supports, analyzes sleep mode results returned by the system, and determines whether the system supports connected standby or modern standby. If the system supports connected standby or modern standby, the sleep modes returned by the system include hibernation (connected), and if the system supports hibernation, the sleep modes returned by the system includes hibernation.

The configuration file includes whether a customer's NDIS device demand for a tablet computer that supports connected standby or modern standby is NDIS 5.1 or NDIS 6.3.

The values of ndisconfiged are used to determine which type of NDIS device drivers is to be pre-installed by the adaptive installation module during installation of a driver.

At step S103, the environment recording module in the application records the environment information into the computer's registry.

A registry path of the ndisconfiged values does not need to be fixed, as long as the ndisconfiged values can be acquired by an environment acquisition module during installation of a driver.

At step S104, after the application is installed, a driver installation process is initiated.

At step S105, during installation of a driver, the environment acquisition module acquires environment information from registry information.

During installation of a driver, the environment acquisition module reads an ndisconfiged value and records the ndisconfiged value from the registry path in which the ndisconfiged value is stored.

At step S106, during installation of a driver, the adaptive installation module performs pre-installation of the driver.

The adaptive installation module reads the configuration file and confirms, according to an ndisconfiged value, which driver is to be pre-installed. If the ndisconfiged value is 0 or 3, NDIS51.inf is pre-installed. If the ndisconfiged value is 1 or 2, NDIS62.inf is pre-installed. If the ndisconfiged value is 4, NDIS63.inf is pre-installed.

The configuration file contains a correlation between ndisconfiged values and driver versions, as shown in Table 1:

| ndisconfiged | Driver |
|---|---|
| 0 | NDIS51.inf |
| 1 | NDIS62.inf |
| 2 | NDIS62.inf |
| 3 | NDIS51.inf |
| 4 | NDIS63.inf |

At step S107, when the application is running, the adaptive configuration module in the application initializes different application SDKs according to the environmental information.

NDIS5.1, NDIS6.2 and NDIS6.3 require different SDKs. Therefore, each time the application runs, it is necessary to confirm, according to the environment information, which SDK needs to be initialized. If the ndisconfiged value is 0 or 3, the SDK of NDIS5.1 is initialized. If the ndisconfiged value is 1 or 3, the SDK of NDIS6.2 is initialized. If the ndisconfiged value is 4, the SDK of NDIS6.3 is initialized.

At step S108, when the application is uninstalled, the registry information related to the environment needs to be deleted by means of the environment deleting module.

The embodiment of the present disclosure can test a computer environment in which an NDIS device will work, and adaptively configure and install different NDIS device drivers and NDIS device applications according to different computer environments so as to solve the problem of loss of a power-saving sleep function of tablet computers, realizing customer demands on NDIS devices and improving user experience of products.

An embodiment of the present disclosure further provides a computer-readable storage medium storing thereon computer-executable instructions that, when executed, implement the NDIS device configuration method.

It can be understood by those of ordinary skill in the art that all or some steps in the above method can be implemented by means of relevant hardware instructed by a program, and the program can be stored in a computer-readable storage medium, such as a read-only memory, a magnetic disk and an optical disk. Optionally, all or some steps in the above embodiments can also be implemented using one or more integrated circuits. Accordingly, each module/unit in the above embodiments can be implemented in the form of hardware or in the form of a software functional module. The present disclosure is not limited to any specific combination of hardware and software.

The above are only preferred embodiments of the present disclosure. Of course, the present disclosure may also have various other embodiments. Without departing from the spirit and essence of the present disclosure, those skilled in the art can make various changes and modifications according the present disclosure, but these corresponding changes and modifications should all fall within the scope of the claims appended to the present disclosure.

### Industrial applicability

The technical solution provided in the embodiments of the present disclosure can be applied to the field of communication technology. The NDIS device configuration method and apparatus, and the computer storage medium provided in the embodiments of the present disclosure can adaptively configure an NDIS device according to an environment.

## Claims

1. A method for configuring a network driver interface specification device, called an NDIS device, the method comprising:
during installation of an application on an NDIS device, testing a computer environment and recording computer environment information;
during installation of a driver on the NDIS device, selecting, according to the computer environment information, a corresponding NDIS driver version for pre-installation; and
when the application of the NDIS device is running, initializing, according to the computer environment information, a corresponding application software development kit.

2. The method according to claim 1, wherein testing a computer environment and recording computer environment information comprises:
if it is tested that an operating system version of a computer is a first operating system version, recording first computer environment information;
if it is tested that the operating system version of the computer is neither the first operating system version nor a second operating system version, recording second computer environment information;
if it is tested that the operating system version of the computer is the second operating system version and the computer does not support a specified sleep mode, recording third computer environment information; and
if it is tested that the operating system version of the computer is the second operating system version and the computer supports the specified sleep mode, reading a configuration file, and recording corresponding fourth computer environment information according to a customer demand.

3. The method according to claim 2, wherein
testing the operating system version of the computer is performed by calling a system application programming interface.

4. The method according to claim 2, wherein
the specified sleep mode comprises a connected standby mode or a new standby mode.

5. The method according to claim 1, wherein selecting, according to the computer environment information, a corresponding NDIS driver version for pre-installation comprises:
according to the computer environment information, selecting, from a correlation between computer environment information and NDIS device driver versions preset in a configuration file, a corresponding NDIS device driver version for pre-installation.

6. The method according to claims 1-5, wherein after running of the application of the NDIS device, the method further comprises:
when the application of the NDIS device is uninstalled, deleting registry information related to the computer environment.

7. An apparatus for configuring a network driver interface specification device, called an NDIS device, the apparatus comprising:
a test module, which is configured to test a computer environment and record computer environment information during installation of an application on an NDIS device;
a driver installation module, which is configured to select, according to the computer environment information, a corresponding NDIS driver version for pre-installation during installation of a driver on the NDIS device; and
a configuration module, which is configured to initialize, according to the computer environment information, a corresponding application software development kit when the application of the NDIS device is running.

8. The apparatus according to claim 7, wherein
testing a computer environment and recording computer environment information by the test module comprises: if it is tested that an operating system version of a computer is a first operating system version, recording first computer environment information; if it is tested that the operating system version of the computer is neither the first operating system version nor a second operating system version, recording second computer environment information; if it is tested that the operating system version of the computer is the second operating system version and the computer does not support a specified sleep mode, recording third computer environment information; and if it is tested that the operating system version of the computer is the second operating system version and the computer supports the specified sleep mode, reading a configuration file, and recording corresponding fourth computer environment information according to a customer demand.

9. The apparatus according to claim 8, wherein
testing, by the test module, the operating system version of the computer is performed by calling a system application programming interface.

10. The apparatus according to claim 7, wherein
according to the computer environment information, selecting, by the driver installation module, a corresponding NDIS device driver version for pre-installation comprises: according to the computer environment information, selecting, from a correlation between computer environment information and NDIS device driver versions preset in a configuration file, a corresponding NDIS device driver version for pre-installation.

11. The apparatus according to claims 7-10, further comprising:
an uninstallation module, which is configured to delete registry information related to the computer environment when the application of the NDIS device is uninstalled.

12. An apparatus for configuring a network driver interface specification device, called an NDIS device, the apparatus comprising: a memory, a processor, and a computer program stored on the memory and executable on the processor, wherein when executing the program, the processor implements the following steps:
during installation of an application on an NDIS device, testing a computer environment and recording computer environment information;
during installation of a driver on the NDIS device, selecting, according to the computer environment information, a corresponding NDIS driver version for pre-installation; and
when the application of the NDIS device is running, initializing, according to the computer environment information, a corresponding application software development kit.

13. A computer storage medium storing thereon one or more programs executable by a computer, when executed by the computer, the one or more programs causing the computer to implement the method for configuring a network driver interface specification device according to any one of claims 1-6.
